# EUROPEAN PATENT SPECIFICATION

(11) **EP 2 625 151 B1**
(45) Date of publication and mention of the grant of the patent: **26.06.2024**
(21) Application number: 11831674.4
(22) Date of filing: 07.10.2011
(51) Int. Cl.: C04B 28/02, C04B 28/14, C04B 28/00, C04B 111/00

(54) **COMPOSITE PARTICLE AND USE FOR MAKING A FIBER-REINFORCED BARRIER MATRIX COMPOSITION**
VERBUNDPARTIKEL UND IHRE VERWENDUNG ZUR HERSTELLUNG EINER FASERVERSTÄRKTEN BARRIEREMATRIXZUSAMMENSETZUNG
PARTICULE COMPOSITE ET UTILISATION POUR FABRIQUER UNE COMPOSITION DE MATRICE DE BARRIÈRE RENFORCÉE DE FIBRES

(30) Priority: 07.10.2010 US 390636 P
(43) Date of publication of application: 14.08.2013
(73) Proprietor: Aquablok, Ltd., Toledo, Ohio 43614 (US)
(72) Inventor: HULL, John, H., Ottawa Hills OH 43606 (US)
(74) Representative: Klunker IP Patentanwälte PartG mbB
(86) International application number: PCT/US2011/055356
(87) International publication number: WO 2012/048215

(56) References cited:
- EP-A1- 1 028 095
- WO-A2-2007/062003
- FR-A1- 2 183 133
- GB-A- 2 149 772
- US-A- 5 897 946

## Description

### BACKGROUND OF THE INVENTION

Cementitious compositions are well known and include, for example, ready-mix concrete, precast concrete, masonry concrete (mortar), shotcrete, bituminous concrete, gypsum compositions, gypsum- and/or Portland cement-based fireproofing compositions, and others. These compositions are used for a wide variety of purposes. For example, concrete is used for the construction of roads and bridges, and for the construction of commercial and residential building structures, such as skyscrapers, high rises, and the foundations of homes.

Cementitious compositions, while recognized as having significant compressive strength, typically have low tensile strength and have been known to undergo degradation, deterioration, crumbling, cracking and/or separation of the matrix. This can occur over time or by exposure to extreme or repeated weather or other environmental conditions. Stresses, such as wear, movement, vibrations, repeated expansion and contraction due to temperature changes and the like may also contribute to these problems. In addition, like constructed soil structures, concrete is known to have a very low tensile strength, and embedded steel reinforcement bars ("re-bar") are incorporated in designs to address the otherwise low tensile strength of concrete. Similarly, brick making includes the addition of straw to clay to provide reinforcement during initial drying, a technique also used to make wattle and adobe structures. Modem materials, such as manufactured geotextiles and extruded plastic forms, have also been developed to reinforce earthen structures such as roadbases, dams, and levees - these geotextile materials providing the tensile strength to enable better distribution of loads, a property not found in un-reinforced, non-cementatious, un-fired earthen based building materials.

To address these problems, it is known to include fibers or filaments in the cementitious compositions to reinforce them and to primarily provide a tensile strength. See, for example, U.S. Patent 7,441,600 to Brothers et al. These materials can strengthen the cementitious composition and improve its tensile strength thereby maintain its integrity and/or prevent it from cracking or fracturing.

A type of barrier matrix composition can be prepared using composite particles like those sold as the AquaBlok^{®} composite particle system by AquaBlok, Ltd., Toledo, Ohio. The AquaBlok^{®} composite particle system is described in U.S. Patent Nos. 5,538,787 issued July 23, 1996; U.S. 5,897,946 issued April 27, 1999; U.S. 6,386,796 issued May 14, 2002; and U.S. 6,558,081 issued May 6, 2003.

However, no prior art known to applicant is capable of producing fiber reinforced barrier matrix compositions easily and quickly via small pellets like applicant's composite particles, or one that derives improved tensile, shear, and/or scour strength via the cohesive forces of a hydratable material.

### SUMMARY OF THE INVENTION

The invention, which is defined in the appended claims, relates to composite particles useful for making fiber- reinforced barrier matrix compositions. Thus, in a first aspect, the invention relates to a composite particle.

In a second aspect, the invention relates to a fiber-reinforced barrier matrix composition, made with the composite particles. The barrier matrix thus comprises the composite particles and water, which hydrates the hydratable material to form a matrix in which are dispersed the core and fibrous reinforcing material.
In a third aspect, the invention includes a method of making a fiber-reinforced barrier matrix composition using the composite particles. The method broadly comprises:
depositing a plurality of composite particles to a desired barrier location;
hydrating the particles with water, wherein the water and hydratable materials form a matrix in which the cores and fibrous reinforcing material are dispersed and held by cohesive forces; and
allowing the matrix to coalesce to produce the fiber-reinforced barrier matrix composition.

In each of the three aspects, the hydratable material may be a clay, such as a mineral clay selected from the Phyllosilicates or Tektosillicates, typically the Phyllosilicates of the Nikel-Strunz groups 9EC, 9ED or 9EE. In some embodiments, the hydratable material may be selected from the kaolinite, montmorillonite/ smectite/ bentonite, palygorskite / attapulgite, vermiculite, and minnesotaite groups. In each of the three aspects, the core may be any solid matter. It may be relatively dense, as when the particles are intended to sink. It may be, for example, a stone or a degradable material.

In each of the three aspects, the fibrous material may be a natural or synthetic fiber, which may be chemically reactive or inert; dispersed within the second hydratable layer - either homogenously or not. The fibrous reinforcing material may constitute from about 1% to about 20 % of the total weight of the dry composite particle. More than one hydratable layer is present. A protective coating, while desirable in some cases, is optional.

In the second and third aspects, the composite particles may contain all the ingredients necessary to form the barrier matrix, or additional ingredients may be added. In embodiments with additional ingredients, the added ingredients may include binders, cements and/or aggregates typical of cementitious compositions, for example, Portland cement, cement kiln dust, lime dust, stone dust, fly ash, plaster of Paris, gypsum, gypsum fines, gravel, stones, sand, or a mixture of these materials. When used, the additional ingredients may be dry-blended with the composite particles prior to hydration, or blended with them and water at the same time. Additional components of the barrier matrix and method of making it may also include structural reinforcements like geotextiles or re-bar.

Other features and advantages of the invention will be apparent from the detailed description that follows.

### BRIEF DESCRIPTION OF THE DRAWINGS

The accompanying drawings, incorporated herein and forming apart of the specification, illustrate the present invention in its several aspects and, together with the description, serve to explain the principles of the invention. In the drawings, the thickness of the lines, layers, and regions may be exaggerated for clarity.
Fig. 1 is a sectioned view of a single bead according to a first embodiment (not falling under the claimed scope);
Fig. 2 is a sectioned view of a single bead according to a second embodiment (not falling under the claimed scope);
Fig. 3 is a sectioned view of a single bead according to a third embodiment (not falling under the claimed scope);
Fig. 4 is a sectioned view of a single bead according to a fourth embodiment (falling under the claimed scope); and
Fig. 5 is a sectioned view of an illustrative barrier matrix composition.

### DETAILED DESCRIPTION OF THE INVENTION

The present disclosure relates to fiber-reinforced, barrier matrix compositions that are made with a plurality of manufactured composite particles having a reinforcing fiber incorporated therein, and to such composite particles themselves.

### Barrier matrix compositions

"Matrix compositions" as used herein broadly refers to materials that comprise one or more aggregate materials dispersed in and held together by a binder matrix material. In the cementitious matrix, concrete, the aggregate is stone and/or sand, and the binder is typically Portland cement, activated by water to effect a cure reaction and crystallize the matrix. However, "matrix compositions" of the present invention differ from other cementitious compositions in the mechanism by which the aggregate is held in the matrix; namely, the aggregates or particulates are held in the binder matrix by cohesion, not crystalline structure.

"Cohesion" in a chemical sense generally refers to the action or property of like molecules sticking together, being mutually attractive. This is an intrinsic property of a substance that is caused by the shape and structure of its molecules which makes the distribution of orbiting electrons irregular when molecules get close to one another, creating electrical attraction that can maintain a macroscopic structure. A water drop, for example, illustrates chemical cohesion since each molecule may make four hydrogen bonds to other water molecules in a tetrahedral configuration. Cohesion is the principle force behind phenomena such as meniscus, surface tension and capillary action.

However, in geological disciplines, "cohesion" is the component of shear strength of a rock or soil that is independent of interparticle friction. In soils, true cohesion is caused by one of three things:
1. Electrostatic forces in stiff over-consolidated clays (which may be lost through weathering)
2. Cementing by Fe₂O₃, CaCO₃, NaCl, etc.,
3. Root cohesion (which may be lost through logging or fire of the contributing plants, or through solution)

"Cohesion" or "cohesive attraction" or "cohesive force" as used herein refers to the electrostatic forces that clay mineral molecules exhibit for other clay mineral molecules; and in this sense is a hybrid of the first aspect of geological cohesion and the chemistry meaning of cohesion.

Unlike the crystalline structure caused by the curing reaction of concrete, it is a key feature that barrier matrix compositions of the present invention are held together by cohesive forces. Fiber-reinforced barrier matrix compositions of the present invention can be made simply by combining the composite particles of the present invention with water. The composite particles themselves supply the aggregate the binder matrix material and the reinforcing fibers. Upon hydration, the matrix layer expands and the fibers are re-oriented during the expansion to form a fiber-reinforced binder matrix that cohesively holds the aggregate cores dispersed within the matrix.
The mixture may be allowed to self-compact to solidify to form the reinforced composition, which exhibits improved tensile strength, shear strength, and/or scour strength as a result of the fiber reinforcement.

The barrier matrix compositions may include further optional ingredients as is generally known in the art. For example, an auxiliary binder may promote the adhesion of the binder (i.e. hydratable sealant material) to the aggregate and/or help to hold the binder material together. Some auxiliary binders include, for example, glues, lignites (sap), starch grafted polyacrylates, and soybean oil lecithins and their derivatives.

Other optional materials include other, more traditional reinforcements besides the fibers, such as metal, plastic, fiberglass, or carbon reinforcing bars, scrims, fabrics, lathing material, or other similar structures. Further optional materials include chemical additives such as accelerators, retarders, air entrainers, plasticizers, colorants or pigments, biocidal agents, bird or insect aversion agents, sorptive media, corrosion inhibitors, and bonding agents.

### Composite particles

The composite particles used in the disclosure may have a wide variety of general physical configurations and sizes and are similar to the manufactured composite particles of the type sold as the AquaBlok^{®} composite particle system by AquaBlok, Ltd., Toledo, Ohio. The AquaBlok^{®} composite particle system is described in the following patents:
U.S. 5,538,787 issued July 23, 1996; U.S. 5,897,946 issued April 27, 1999; U.S. 6,386,796 issued May 14, 2002; and U.S. 6,558,081 issued May 6, 2003.

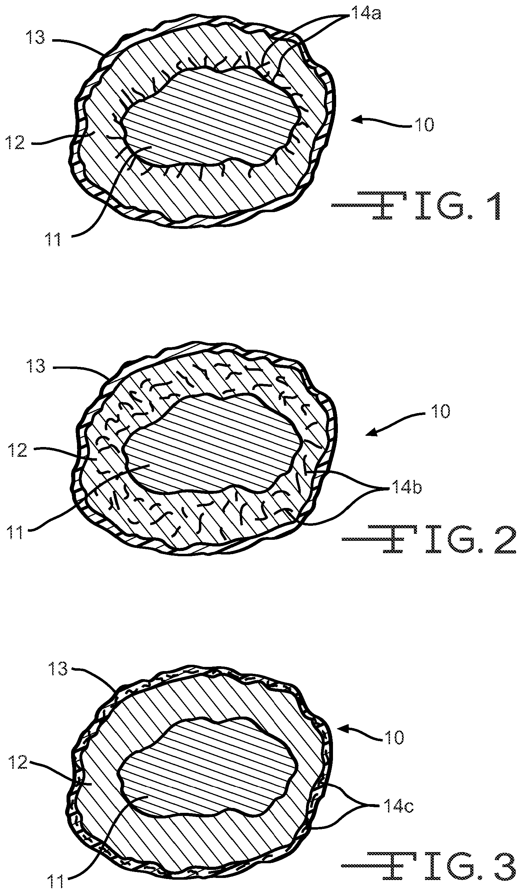

The size of the composite particle 10 can range from a small pebble to a large size rock or even larger. Preferably, the composite particle is generally spherical in form, but it can also be other shapes such as oval, egg, oblong, or irregular giving rise to a major axis and minor axis (which are equal in spherical particles). Particles generally have a major axis dimension of from about 1 mm to 30 mm or more; more typically from about 2 mm to 10 mm. Figures 1 to 4 illustrate several embodiments. The composite particle 10 is formed of a core 11 which is encapsulated by a hydratable sealant layer 12 (which is a first hydratable sealant layer).
Reinforcing fibers 14 (a-d) are found within the composite particle at one or more of several locations as described below. There may be an optional protective coating 13 at least partially encapsulating the hydratable sealant layer 12.

### Cores

The core 11 of the composite particle 10 may be formed of nearly any material. It may comprise from about 10 to about 80% of the major axis dimension and from about 45 to 95% of the total weight of the particle. It may comprise a solid stone or rock core such as a fine aggregate and/or coarse aggregate. Fine aggregate includes small particles such as sand and other sand-sized materials. Coarse aggregate includes larger particles such as gravel, crushed stone, recycled aggregates (from construction, demolition and excavation waste), and manufactured aggregates (for example, furnace slag and bottom ash).

In some embodiments, the core 11 of the composite particle 10 is formed of a material which is relatively dense and preferably relatively hard when compared to the sealant layer 12. The core may need to be relatively dense so it can carry the composite particle to the isolated or treated surface, such as for underwater applications. Examples of suitable materials for forming the core include pieces of rock or stone, iron ore, slag, glass cullet, crushed glass or crushed porcelain, gravel, or other solid aggregate. For some specific project applications, a less dense core (e.g., perlite) relative to the sealant layer 12 may be used, although the specific gravity of the composite particle, as a whole, is typically greater than one.

In another embodiment, the core of the composite particle is formed of a degradable material so that it can slowly dissipate over a period of time. The use of a degradable core offers some advantages, particularly in underwater situations. It facilitates hydraulic dredging operations. A degradable core also allows the underwater surface to be replenished with a new barrier layer from time to time, such as for revegetation of the surface. A degradable core can also deliver remediation /restoration materials to the underwater surface.

Various materials can be used to form a degradable core so long as the core remains relatively dense compared to the sealant layer and the composite particle as a whole has a specific gravity greater than one. Sand is a preferred material for forming a degradable core. The sand will function as a carrier of the composite particle to an underwater surface, and when hydrated it will disperse into the material of the sealant layer. Other suitable materials for the degradable core include very small stones or rocks, rubber tire chips, sugar-based materials such as rock candy, pelletized recycled paper such as magazines or newspapers, pelletized clay mineral that hydrates very slowly, or high-density fertilizer. These materials can be held together by a binder, such as those used in the sealant layer, to create any size core needed.

The core of the composite particle can also be formed of pozzolanic materials such as gypsum, gypsum fines, portland cement, cement kiln dust, lime dust, stone dust, fly ash, and plaster of Paris.

### Hydratable Sealant Layer

The hydratable sealant layer 12 of the composite particle 10 is formed of a cohesive hydratable material. The sealant layer may comprise from about 10 to about 60% of the major axis dimension and from about 5 to 60% of the total weight of the particle. By "hydratable" is meant that the sealant material absorbs water in a substantial amount, swelling in volume as it does. For example, compared to a volume of dry clay, a hydrated clay may swell to at least 1.5 times its volume, at least 2.0 times its volume, at least 3.0 times its volume, at least 5.0 times its volume, or at least 10 times its volume.

In many embodiments, the hydratable material is a clay mineral or a mixture of clay minerals that, while not hardening, does generate cohesive strength by the hydration process. Clay is common name for a wide variety of weathered mineral or igneous rock. Various classification schemes, such as the Nickel-Strunz classification, divide up mineral clays according to composition and/or structure. Suitable clays may be found in the kaolinite group, the smectite or montmorillonite group, the attapulgite group and the zeolite group. Generally, these groups contain sheets or layers formed of specific tetrahedral and/or octahedral structures of aluminum and silicon oxides. The layers or platelets are held together by ionic bonds with charged ions (usually cations) located between the layers. The Nickel-Strunz classification (version 10) divides silicates (group 9) into nine different subcategories, the most useful being Phyllosilicates (group 9E) and the Tektosillicates with and without Zeolitic H₂0 (groups 9G and GF, respectively). Phyllosilicates (group 9E) are divided into nine subcategories, the most useful being group 9EC (with mica sheets), group 9ED (with kaolin layers), and group 9EE (single tetrahedral nets of six-membered rings). Exemplary clays from these groups include kaolinite, montmorillonite (also called smectite and bentonite), talc, mondorite, nontronite, palygorskite or attapulgite, muscovite, vermiculite, saponite, hectorite, rectorite, and minnesotaite. Bentonite is a useful impure clay largely containing montmorillonite.

lt is the layers or "platelets" of phyllosilicates that give them many of their properties, including the plasticity for use as pottery. When the layers are of thickness dimensions in the few nanometer range, they are often referred to as nanoclays. An example is the NANOLIN DK series of nanoclays available from Zhejiang Fenghong Clay Chemicals Co., LTD., which are made from highly purified smectite that exhibits ultra-fine phase dimensions. The size of these nanoclays is typically in the range of 1-100 nm; the average fully dispersed thickness of platelets is around 25 nm; the aspect ratio ranges from 100 tol000.

Modified clays are formed when various processes are used to separate and expand the layers or platelets. Intercalation, exfoliation, and fuming are processes that modify the layered structure. Intercalation inserts a polymer or other molecule between the platelet layers to isolate them, but without much physical separation. Exfoliation, on the other hand, inserts a polymer or molecule and expands the space between layers by 10-20 fold. Fuming is a flaming process that introduces hydroxyl groups onto the surface of the silica structures.

A specific type of modified clay that impacts hydrophilicity and solubility produces clays known as "organoclays." Organoclays are modified by the replacement of the cation (usually sodium) between layers with alkylammonium (RiN+) compounds, a type of surfactant. The nitrogen end of the quaternary amine, the hydrophilic end, is positively charged, and ion exchanges onto the clay platelet for sodium or calcium. The amines used generally have long-chain R groups with 12-18 carbon atoms, making them more compatible with many organic polymers. After about 30 per cent of the clay surface is coated with these amines, it becomes hydrophobic and, with certain amines, organophilic. Additionally, exfoliation of organoclays becomes easier since there is a larger distance between the platelets due to the bigger size of the ammonium salts compared to sodium ions.

A clay-sized material can also be used, such as gypsum or other materials, having an average particle size of less than about 10 microns. The hydratable material may also include other clay-sized or quasi clay-sized materials such as organophilic bentonite, zeolites, and inorganic oxides of aluminum, iron, and/or manganese.

As is known in the art, the relative proportion of core particles to hydratable material can impact the permeability of the compositions. "Barrier" does not exclude permeable matrix layers. More permeable compositions may have higher proportions of core particles (relative to hydratable layer material) than less permeable compositions, but permeability depends on other factors as well. Barriers can be formed having permeabilities from about 10-² cm/sec (relatively permeable) to as low as 10-¹⁰ cm/sec (relatively impermeable), e.g. with mechanical compaction.

### Fibrous reinforcement material

The composite particles 10 include fibers 14(a-d) that are useful for reinforcing the barrier matrix compositions to improve at least one of (a) tensile strength, (b) shear strength, and (c) scour strength of the barrier matrix. Tensile strength represents resistance to a force pulling the composition apart, producing a parting failure generally transverse to the pulling force. Shear strength represents resistance to a force tending to fracture the composition along a plane generally parallel to the shear force. Scour strength represents resistance to degradation and failure arising from the motion of a fluid such as air or water (e.g. wave action or current flow) and particulates (e.g. sand) the fluid may contain.

As used herein, "fiber", "fibrous material", and "reinforcement fiber" are all used interchangeably and include any type of fibrous material having a long axis, equivalent to a length, and a short axis, equivalent to a diameter in many fiber shapes, including fibers, filaments, microfibers, and others. The aspect ratio of long axis to short axis may be from about 5 to tens of thousands, more typically from about 100 to about 10,000. Fiber material is generally sized commensurate with the size of the composite particle, so it can be large enough to be visible to the naked-eye (e.g. about 0.1 mm to about 100 mm) or small enough to be categorized as a nano-material.

The fibers may be composed of many different types of materials, natural or synthetic, including for example, plastic, metal, carbon, mineral, ceramic, glass, cellulose, other inorganic materials, and organic materials. The term "natural fiber" refers to plant fibers extracted from any part of a plant, including, but not limited to, the stem, seeds, leaves, roots, or phloem. Examples of natural fibers suitable for use as the reinforcing fiber material include cotton, jute, bamboo, ramie, bagasse, hemp, coir, linen, kenaf, sisal, flax, henequen, sphagnum, peat moss, Spanish moss, and combinations thereof. Examples of suitable inorganic fibers include glass fibers, wool glass fibers, ceramic fibers, and other mineral fibers. "Mineral fibers" refers to any mineral material that can be melted to form molten mineral that can be drawn or attenuated into fibers. Glass is the most commonly used mineral fiber, but other useful mineral fibers include rock, slag and basalt. "Synthetic fibers" include man-made polymeric fibers including, but not limited to, polymers like polyester, polyethylene, polyethylene terephthalate, polypropylene, polyamide, aramid, and/or polyaramid. "Metal fibers" may be composed of any metallic element(s) alone or in alloy combinations with other elements and/or minerals. Some useful metallic fibers include iron, steel, stainless steel, aluminum, copper, nickel, cobalt, zinc and alloys thereof. Fibrous materials useful in the invention may be homogenous, that is composed of only one type of fiber, or they may be heterogeneous blends of mixed fiber types.

Further, the fibers may be relatively inert or chemically reactive. The typical chemical reactivity found in fibers is related to oxidation-reduction reactions, chelation or sequestration processes, and ion exchange processes. For example, iron fibers may reduce other compounds, thereby becoming oxidized. In another example, ions found in the clay materials (e.g. sodium) may exchange with other ions in the environment (e.g. calcium), in a natural process analogous to the modified clays described above.

The fibers may be disposed in the composite particle in one or more of a variety of locations. In general, the fibers are located within layers or at the interfaces between layers. Fibers within layers may be dispersed substantially homogenously throughout the layer, or concentrated to specific regions of the layer. Figures 1 to 4 illustrate several of many locations for fibers 14 a-d. For example in Figure 1, the fibers 14a are adhered to the core 11 before the hydratable sealant layer 12 is applied. Fibers may be adhered to the core 11 using conventional binders. In Figure 2, the fibers 14b are interspersed as a dispersion in the hydratable sealant material in the layer 12. This dispersion may be homogeneous or not, and fibers 14b may be concentrated nearer the core 11 or nearer the outer edge if desired. In Figure 3, the fibers 14c are found in or comprise the optional protective layer 13, formed around the composite particle 10. Fibers may be found in any combination of these locations, as well as in others not illustrated.

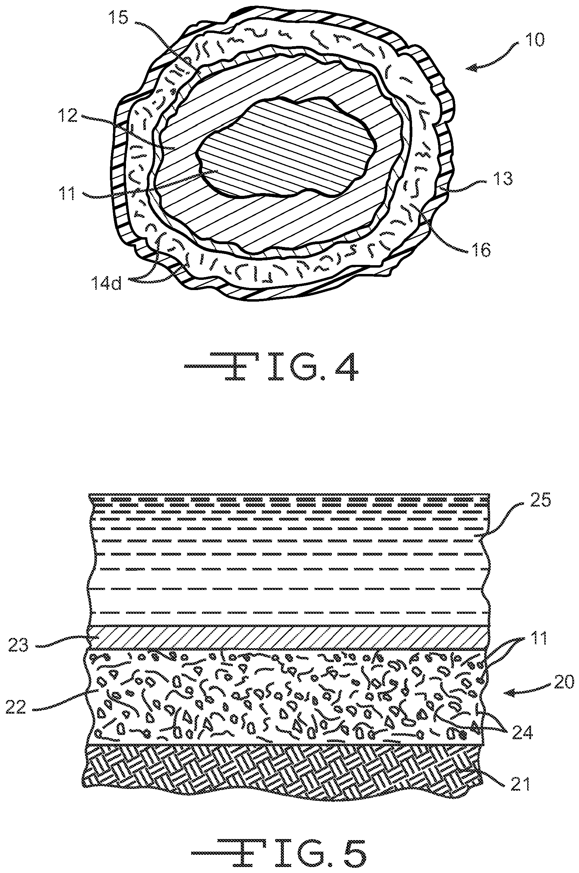

Figure 4 shows an embodiment falling under the claimed scope, where a core 11 is coated with a first hydratable sealant layer 12. A boundary or barrier layer 15 is formed around layer 12 and divide it from a second hydratable sealant layer 16 disposed around the layers 12, 15. An optional protective coating 13 may surround the particle forming an outer shell, as it did in the embodiments of Figures 1-3. The multi-layer embodiment of Figure 4 may include from two to about ten such layers if desired, more likely two to four layers. The hydratable sealant materials of each layer are different, thus potentially introducing differential cohesive forces, which affords a mechanism to form barrier matrix compositions with staged generation of cohesive forces. The fibers 14d shown in Figure 4 are shown in the second hydratable sealant layer 16 disposed around the layers 12, 15.

In addition to fibers selected for chemical reactivity, the choice of fiber should be governed in part by the intended use, and some uses are described below. For example, "sacrificial" fibers, known to have a deterioration rate, may be preferred in temporary structures or environmentally sensitive areas. Fibers, such as cellulosic or carbon fibers, may serve as a source of nutrition for micro- or macro-organisms, and may also be desired in specific locations.

Depending on the choice of fiber and the intended application, the fibrous material may constitute from about 1% to about 20% by weight (dry) of the composite particle. Fibers may range in specific gravity from less than 1 (e.g. carbon fibers) to more than 7 (e.g. iron fibers).

### Protective Coating

The optional protective coating 13 is designed to make the particles easier to handle, ship and store. It should be a durable, but dissolvable or water permeable, coating, such as a polymeric coating. The coating 13 should be of a thickness that, under intended use conditions and timeframe for matrix formation, does not prevent hydration of the hydratable material layer 12. Suitable polymeric materials include latex and acrylic resins. A gypsum-in-water slurry may also be suitable. The coating 13 may be applied by any means, such as coating drums or spraying. The optional coating may comprise from 0% to about 5% of the particle weight.

### Uses of Composite particles and Barrier matrix compositions

The barrier matrix composition can be manufactured by any suitable method. In general, the composite particles include all the materials (other than water) needed to make the cohesive barrier matrix compositions of the invention. It is a feature and advantage that the composite particles are flowable and can readily be deposited to virtually any location. Composite particles are deposited in a desired location and are simply mixed with water to hydrate the hydratable materials of the sealant layers.

In another method, the composite particles are mixed with additional ingredients such as might be used in traditional cementitious compositions, like concrete. For example, optional additional ingredients might include additional aggregate such as sand, gravel, or rock; or additional binders such as Portland cement, cement kiln dust, lime dust, stone dust, fly ash, plaster of Paris, gypsum, gypsum fines, or a mixture of these materials. These optional materials maybe dry blended with the composite particles prior to hydration, or they may be wet mixed all together to form the barrier matrix compositions.

As noted above, other optional materials include the more traditional reinforcements, such as metal, plastic, fiberglass, or carbon reinforcing bars, scrims, fabrics, lathing material, or other similar structures, as well as chemical additives such as accelerators, retarders, air entrainers, plasticizers, colorants or pigments, biocidal agents, bird or insect aversion agents, corrosion inhibitors, bonding agents and the like.

In use, the hydratable material of the composite particles becomes hydrated, swells and forms cohesive attractions that hold the core and reinforcing fibers in place. Upon hydration, at least the fibers 14b, 14c, and 14d are generally re-oriented during the expansion and may become essentially homogeneously dispersed throughout the matrix. Fibers 14a may have portions that stay adhered to the core 11 and portions that expand into the matrix to help to secure the core particle in the matrix. The mixture may be actively compacted or allowed to self-compact passively, to solidify to form the reinforced barrier matrix composition. In some cases, agitation such as stirring or mixing may be desired, but in other applications agitation may be impossible or not desirable.

Figure 5 illustrates one potential use of a barrier matrix composition 20 in accordance with the invention. Over a ground layer 21, the composite particles are spread and hydrated. Hydration swells the particles to form a substantially continuous matrix 22 in which are dispersed the core particles 11 and the reinforcing fibers 24. Some fibers 24 are shown attached to core particles and others are dispersed in the hydratable layer. One or more additional layers 23, 25 may be disposed over the barrier matrix composition 20, as might be the case for a roadbed or other application. In one embodiment, one additional layer 25 comprises water, for example, an ocean, river, stream, or lake.

A sufficient quantity of particles are deposited to form a barrier of desired thickness. lt is typical for the composite particles to swell considerably, for example up to 100% or more of their initial volume. Depending on purpose, barrier layers may range from a 1 or 2 cm to 50 or more cm in thickness. For example, barriers may be formed from about 5 cm to about 25 cm in thickness.

The composite particles of the invention are advantageous in that the fibrous reinforcements provide the barrier matrix compositions with at least one of additional tensile strength, shear strength, and scour strength. In some cases, all three are improved. This allows the compositions to be used in a broad range of applications. For example, compositions according to the invention can be used in road beds, dams, berms, levees and more. Uses such as landfill liners, contamination recovery, pipe encasements and others described in the aforementioned patents are exemplary uses for the barrier matrix compositions of the invention as well. Use in place of or in combination with geotextiles is also envisioned. Geotextiles include soil additive structures such as the Geoweb^{™} products from Presto Geosystems (Appleton, WI); Strataweb^{™} and Stratagrid^{®} products of Strata Systems (Cumming, GA); and Tensar^{®} TriAx^{®} and Prism^{®} products (Alpharetta, GA), for example.

Due to the improved tensile, shear, and/or scour strength, barrier matrix compositions made according to the invention are especially suitable in sloped locations with greater angle of repose than was possible with prior compositions. The angle of repose is a measure of the steepest angle with horizontal that a given soil or material can assume under given conditions, and it varies greatly with the nature of the soil, its cohesiveness, its hydration, water action, and buoyancy forces. But under equivalent conditions and soils, barrier layers made with the fiber-containing composite particles of the invention tend to improve useful angles of repose by 10% or more. This advantageous feature also permits use in shoreline locations that experience a high degree of wear, such as at boat ramps or beaches where water craft and/or foot traffic may abrade the surface.

## Claims

1. A composite particle comprising:
a core;
a first sealant layer formed of a cohesive hydratable material encapsulating the core;
a second sealant layer formed of a hydratable material disposed around the first sealant layer;
a fibrous reinforcing material in the second sealant layer; and
a barrier layer formed around the first sealant layer dividing the first sealant layer from the second sealant layer, wherein the second sealant layer is disposed around the barrier layer and the first sealant layer, and optionally a protective coating surrounding the composite particle forming an outer shell;
wherein the hydratable materials of the first sealant layer and the second sealant layer are different.

2. The composite particle of claim 1, comprising the protective coating forming an outer shell.

3. The composite particle of claim 1 or 2, wherein the hydratable material of the first sealant layer is selected from Phyllosilicates or Tektosilicates.

4. The composite particle of claim 3, wherein the hydratable material of the first sealant layer is selected from Phyllosilicates of the Nikel-Strunz groups 9EC, 9ED and 9EE or
wherein the hydratable material of the first sealant layer is selected from the kaolinite, montmorillonite/ smectite/ bentonite, palygorskite / attapulgite, vermiculate, and minnesotaite.

5. The composite particle of claim 1, wherein the fibrous reinforcing material is a natural fiber.

6. The composite particle of claim 1, wherein the fibrous reinforcing material is a synthetic fiber.

7. The composite particle of claim 1, wherein the fibrous reinforcing material is an mineral fiber.

8. The composite particle of claim 1, wherein the fibrous reinforcing material is a chemically reactive fiber.

9. The composite particle of claim 1, wherein the fibrous reinforcing material is 1 to 20 % of the total weight of the dry composite particle.

10. A barrier matrix composition comprising the composite particles according to any of claims 1-9 and water.

11. A barrier matrix composition according to claim 10, further comprising additional aggregate.

12. A barrier matrix composition according to claim 10, further comprising additional binder selected from Portland cement, cement kiln dust, lime dust, stone dust, fly ash, plaster of Paris, gypsum, gypsum fines, or a mixture of these materials.

13. A method of making a barrier matrix composition comprising:
depositing a plurality of composite particles according to any of claims 1-9 to a desired barrier location;
hydrating the particles with water, wherein the water and hydratable materials form a matrix in which the cores and fibrous reinforcing material are dispersed and held by cohesive forces; and
allowing the matrix to coalesce to produce the fiber-reinforced barrier matrix composition.

14. A method according to claim 13, further comprising mixing the composite particles with at least one additional ingredient selected from a binder cement and aggregate,
wherein the mixing of composite particles with the additional ingredient is preferably done prior to hydration or
wherein the mixing of composite particles with the additional ingredient is done concurrently with hydration.

## Patentansprüche

1. Verbundteilchen, umfassend:
einen Kern;
eine erste Dichtungsschicht, die aus einem kohäsiven hydratisierbaren Material gebildet ist und den Kern einkapselt;
eine zweite Dichtungsschicht, die aus einem hydratisierbaren Material gebildet ist, das um die erste Versiegelungsschicht herum angeordnet ist;
ein faseriges Verstärkungsmaterial in der zweiten Dichtungsschicht; und
eine um die erste Dichtungsschicht herum gebildete Sperrschicht, die die erste Dichtungsschicht von der zweiten Dichtungsschicht trennt, wobei die zweite Dichtungsschicht um die Sperrschicht und um die erste Dichtungsschicht herum angeordnet ist, und gegebenenfalls eine Schutzbeschichtung, die das Verbundteilchen umgibt und eine äußere Hülle bildet;
wobei die hydratisierbaren Materialien der ersten Dichtungsschicht und der zweiten Dichtungsschicht unterschiedlich sind.

2. Verbundteilchen nach Anspruch 1, umfassend die Schutzbeschichtung, die eine äußere Hülle bildet.

3. Verbundteilchen nach Anspruch 1 oder 2, wobei das hydratisierbare Material der ersten Dichtungsschicht ausgewählt ist aus Schichtsilikaten oder Tektosilikaten.

4. Verbundteilchen nach Anspruch 3, wobei das hydratisierbare Material der ersten Dichtungsschicht ausgewählt ist aus Schichtsilikaten der Nikel-Strunz-Gruppen 9EC, 9ED und 9EE oder
wobei das hydratisierbare Material der ersten Versiegelungsschicht ausgewählt ist aus Kaolinit, Montmorillonit/Smektit/Bentonit, Palygorskit/Attapulgit, Vermiculate und Minnesotait.

5. Verbundteilchen nach Anspruch 1, wobei das faserige Verstärkungsmaterial eine natürliche Faser ist.

6. Das Verbundteilchen nach Anspruch 1, wobei das faserige Verstärkungsmaterial eine synthetische Faser ist.

7. Verbundstoffteilchen nach Anspruch 1, wobei das faserige Verstärkungsmaterial eine Mineralfaser ist.

8. Verbundteilchen nach Anspruch 1, wobei das faserige Verstärkungsmaterial eine chemisch reaktive Faser ist.

9. Verbundteilchen nach Anspruch 1, wobei das faserige Verstärkungsmaterial 1 bis 20 % des Gesamtgewichts des trockenen Verbundteilchens ausmacht.

10. Sperrmatrixzusammensetzung, die die Verbundteilchen nach einem der Ansprüche 1-9 und Wasser enthält.

11. Sperrmatrixzusammensetzung nach Anspruch 10, die ferner einen zusätzlichen Zuschlagstoff enthält.

12. Sperrmatrixzusammensetzung nach Anspruch 10, die ferner zusätzliches Bindemittel, ausgewählt aus Portlandzement, Zementofenstaub, Kalkstaub, Steinstaub, Flugasche, Gips, Gipsfeinkorn oder einer Mischung dieser Materialien, umfasst.

13. Verfahren zur Herstellung einer Sperrmatrixzusammensetzung, umfassend:
Aufbringen einer Vielzahl von Verbundteilchen nach einem der Ansprüche 1 bis 9 auf eine gewünschte Sperrstelle;
Hydratisieren der Teilchen mit Wasser, wobei das Wasser und die hydratisierbaren Materialien eine Matrix bilden, in der die Kerne und das faserige Verstärkungsmaterial dispergiert sind und durch Kohäsionskräfte gehalten werden; und
Zusammenwachsenlassen der Matrix, um die faserverstärkte Sperrmatrixzusammensetzung herzustellen.

14. Verfahren nach Anspruch 13, ferner umfassend das Mischen der Verbundteilchen mit mindestens einem zusätzlichen Bestandteil, ausgewählt aus einem Bindemittel, Zement und Zuschlagstoff,
wobei das Mischen der Verbundstoffteilchen mit dem zusätzlichen Bestandteil vorzugsweise vor der Hydratation erfolgt oder
wobei das Mischen der Verbundstoffteilchen mit dem zusätzlichen Bestandteil gleichzeitig mit der Hydratation erfolgt.

## Revendications

1. Particule composite, comprenant :
un noyau ;
une première couche d'agent d'étanchéité formée d'un matériau hydratable cohésif encapsulant le noyau ;
une seconde couche d'agent d'étanchéité formée d'un matériau hydratable disposé autour de la première couche d'agent d'étanchéité ;
un matériau de renfort fibreux dans la seconde couche d'agent d'étanchéité, et
une couche barrière formée autour de la première couche d'agent d'étanchéité divisant la première couche d'agent d'étanchéité de la seconde couche d'agent d'étanchéité, dans laquelle la seconde couche d'agent d'étanchéité est disposée autour de la couche barrière et de la première couche d'agent d'étanchéité, et facultativement, un revêtement protecteur entourant la particule composite formant une coque extérieure ;
dans laquelle les matériaux hydratables de la première couche d'agent d'étanchéité et de la seconde première couche d'agent d'étanchéité sont différents.

2. Particule composite selon la revendication 1, comprenant le revêtement protecteur formant une coque extérieure.

3. Particule composite selon la revendication 1 ou 2, dans laquelle le matériau hydratable de la première couche d'agent d'étanchéité est sélectionné à partir de phyllosilicates ou de tectosilicates.

4. Particule composite selon la revendication 3, dans laquelle le matériau hydratable de la première couche d'agent d'étanchéité est sélectionné à partir de phyllosilicates des groupes de Nikel-Strunz 9EC, 9ED et 9EE. ou dans lequel le matériau hydratable de la première couche d'agent d'étanchéité est sélectionné à partir de la kaolinite, de montmorillonite/smectite/bentonite/palygorskite/attapulgite, vermiculite. et minnesotaïte.

5. Particule composite selon la revendication 1, dans laquelle le matériau de renfort fibreux est une fibre naturelle.

6. Particule composite selon la revendication 1, dans laquelle le matériau de renfort fibreux est une fibre synthétique.

7. Particule composite selon la revendication 1, dans laquelle le matériau de renfort fibreux est une fibre minérale.

8. Particule composite selon la revendication 1, dans laquelle le matériau de renfort fibreux est une fibre réactive sur le plan chimique.

9. Particule composite selon la revendication 1, dans laquelle le matériau de renfort fibreux représente de 1 à 20 % du poids total de la particule composite sèche.

10. Composition de matrice barrière, comprenant les particules composites selon l'une quelconque des revendications 1 à 9 et de l'eau.

11. Composition de matrice barrière selon la revendication 10, comprenant en outre un agrégat supplémentaire.

12. Composition de matrice barrière selon la revendication 10, comprenant en outre un liant supplémentaire sélectionné parmi du ciment Portland, de la poussière de four issue de ciment Portland, de la poussière de chaux, de la poussière de pierre, de la cendre volante, du plâtre, du gypse, des fines de gypse, ou un mélange de ces matériaux.

13. Procédé destiné à fabriquer une composition de matrice barrière, comprenant les étapes suivantes :
déposer une pluralité de particules composites selon l'une quelconque des revendications 1 à 9 sur un emplacement barrière souhaité ;
hydrater les particules avec de l'eau, dans laquelle l'eau et les matériaux hydratables forment une matrice, où les noyaux et le matériau de renfort fibreux sont dispersés et maintenus par des forces de cohésion, et
permettre une coalescence de la matrice pour produire la composition de matrice barrière renforcée par des fibres.

14. Procédé selon la revendication 13, comprenant en outre l'étape pour mélanger les particules composites avec au moins un ingrédient supplémentaire sélectionné parmi un ciment liant et agrégat,
dans lequel le mélange de particules composites avec l'ingrédient supplémentaire est de préférence fait avant hydratation, ou
dans lequel le mélange de particules composites avec l'ingrédient supplémentaire est de préférence fait parallèlement à l'hydratation.
